# EUROPÄISCHE PATENTSCHRIFT

(11) **EP 3 717 570 B1**
(45) Veröffentlichungstag und Bekanntmachung des Hinweises auf die Patenterteilung: **30.03.2022**
(21) Anmeldenummer: 18803976.2
(22) Anmeldetag: 16.11.2018
(51) Int. Cl.: C08L 83/14, C08K 5/548

(54) **SILANMISCHUNGEN UND VERFAHREN ZU DEREN HERSTELLUNG**
SILANE MIXTURES AND PROCESS FOR PREPARING SAME
MÉLANGES DE SILANES ET PROCÉDÉ DE PRODUCTION

(30) Priorität: 28.11.2017 DE 102017221277
(43) Veröffentlichungstag der Anmeldung: 07.10.2020
(73) Patentinhaber: Evonik Operations GmbH, 45128 Essen (DE)
(72) Erfinder: KÖPFER, Alexander, 79872 Bernau im Schwarzwald (DE); RÖBEN, Caren, 45133 Essen (DE); HASSE, Andre, 52428 Jülich (DE); FORSTER, Frank, 63825 Schöllkrippen (DE)
(74) Vertreter: Evonik Patent Association
(86) Internationale Anmeldenummer: PCT/EP2018/081488
(87) Internationale Veröffentlichungsnummer: WO 2019/105759

(56) Entgegenhaltungen:
- EP-A1- 1 375 504
- US-A1- 2003 176 396
- US-A1- 2005 033 002
- DATABASE WPI Week 200747 Thomson Scientific, London, GB; AN 2007-479013 XP002787484, -& JP 2007 109415 A (SONY CORP) 26. April 2007 (2007-04-26)
- MARK C. BURLEIGH ET AL: "Direct Synthesis of Periodic Mesoporous Organosilicas: Functional Incorporation by Co-condensation with Organosilanes", JOURNAL OF PHYSICAL CHEMISTRY PART B: CONDENSED MATTER, MATERIALS, SURFACES, INTERFACES & BIOPHYSICAL, Bd. 105, Nr. 41, 1. Oktober 2001 (2001-10-01), Seiten 9935-9942, XP055535382, US ISSN: 1520-6106, DOI: 10.1021/jp011814k

## Beschreibung

Die Erfindung betrifft Silanmischungen und Verfahren zur deren Herstellung.

Aus EP 0670347 und EP 0753549 sind Kautschukmischungen, enthaltend mindestens einen Vernetzer, einen Füllstoff, gegebenenfalls weitere Kautschukhilfsmittel sowie mindestens ein Verstärkungsadditiv der Formel

R¹R²R³Si - X¹ - (-Sₓ - Y - )ₘ - (- Sₓ - X² - SiR¹R²R³)ₙ

bekannt.

Aus JP2012149189 ist das Silan der Formel (R¹O)ₗR²₍₃₋ₗ₎Si-R³-(SₘR⁴)ₙ-S-R⁵, mit R⁵ = -C(=O)-R⁶ R⁶ = C1-C20 bekannt.

Ferner sind aus EP 1375504 Silane der Formel

(R¹O)_{(3-P)} (R²)_{P}Si-R³-Sₘ-R⁴-(Sₙ-R⁴)_{q}-Sₘ-R³-Si(R²)_{P}(OR¹)_{(3-P)}

bekannt.

Aus WO 2005/059022 sind Kautschukmischungen, enthaltend ein Silan der Formel

[R²R³R⁴Si-R⁵-S-R⁶-R⁷-]R¹

bekannt.

Ferner sind Kautschukmischungen, enthaltend ein bifunktionelles Silan und ein weiteres Silan der Formel (Y)G(Z) (WO 2012/092062) und Kautschukmischungen, enthaltend Bistriethoxysilylpropylpolysulfid und Bistriethoxysilylpropylmonosulfid (EP1085045) bekannt.

Aus EP 1928949 ist eine Kautschukmischung, enthaltend die Silane (H₅C₂O)₃Si-(CH₂)₃-X-(CH₂)₆-S₂-(CH₂)₆-X-(CH₂)₃-Si(OC₂H₅)₃ und/oder (H₅C₂O)₃Si-(CH₂)₃-X-(CH₂)₁₀-S₂-(CH₂)₆-X-(CH₂)₁₀-Si(OC₂H₅)₃ und (H₅C₂O)₃Si-(CH₂)₃-Sₘ-(CH₂)₃-Si(OC₂H₅)₃ bekannt.

Aus US 2003/176396 A1 sind hybrid organische-anorganische Adsorbentien bekannt, wobei unter anderem eine Silanmischung aus Mercaptopropyltriethoxysilan und 1,4-Bis(triethoxysilyl)benzol eingesetzt wird.

Aus JP 2007109415A sind Protonenleiter bekannt, wobei unter anderem eine Silanmischung aus 3-Mercaptopropyltrimethoxysilan und Bis(triethoxysilyl)methan eingesetzt wird.

Ferner sind aus US 2005/033002 A1 Silikonharze bekannt, wobei unter anderem eine Silanmischung aus 3-Mercaptopropyltrimethoxysilan und 1,8-Bis(triethoxysilyl)octan bzw. 1,2-Bis(triethoxysilyl)ethan eingesetzt wird.

Aus Mark C. Burleigh et al. "Direct Synthesis of Periodic Mesoporous Organosilicas: Functional Incorporation by Co-condensation with Orangosilanes" Journal of Physical Chemistry Part B: Condensed Matter, Materials, Surfaces, Interfaces & Biophysical, Bd. 105, Nr. 41.1. Oktober 2001, Seiten 9935-9942, ist die Synthese von mesoporösen Organokieselsäuren bekannt, wobei unter anderem eine Silanmischung aus 3-Mercaptopropyltrimethoxysilan und 1,2-Bis(triethoxysilyl)ethan eingesetzt wird.

Aufgabe der vorliegenden Erfindung ist es, Silanmischungen zur Verfügung zu stellen, welche gegenüber aus dem Stand der Technik bekannten Silanen einen verbesserten Rollwiderstand, eine verbesserte Verstärkung und einen verbesserten Abrieb in Kautschukmischungen aufweisen.

Gegenstand der Erfindung ist eine Silanmischung, enthaltend ein Silan der Formel I

(R¹)_{y}(R²)_{3-y}Si-R³-SH (I)

, und ein Silan der Formel II

(R¹)_{y}(R²)_{3-y}Si-R³-(S-R⁴)_{z}-Si(R¹)_{y}(R²)_{3-y} (II)

, wobei R¹ gleich oder verschieden sind und C1-C10-Alkoxygruppen, vorzugsweise Methoxy- oder Ethoxygruppen, Phenoxygruppe, C4-C10-Cycloalkoxygruppen oder Alkylpolyethergruppe -O-(R⁵-O)ᵣ-R⁶ mit R⁵ gleich oder verschieden sind und eine verzweigte oder unverzweigte, gesättigte oder C30-Kohlenwasserstoffgruppe sind, vorzugsweise -CH₂-CH₂-, r eine ganze Zahl von 1 bis 30, vorzugsweise 3 bis 10, und R⁶ unsubstituierte oder substituierte, verzweigte oder unverzweigte einbindige Alkyl-, Alkenyl-, Aryl- oder Aralkylgruppen, vorzugsweise C₁₃H₂₇ Alkyl-Gruppe ist,

R² gleich oder verschieden sind und C6-C20-Arylgruppen, vorzugsweise Phenyl, C1-C10-Alkylgruppen, vorzugsweise Methyl oder Ethyl, C2-C20-Alkenylgruppe, C7-C20-Aralkylgruppe oder Halogen, vorzugsweise CI ist,

R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe, bevorzugt C1-C20-, besonders bevorzugt C1-C10-, ganz besonders bevorzugt C2-C7-, insbesondere bevorzugt CH₂CH₂, CH₂CH₂CH₂ und (CH₂)₈ sind,

R⁴ gleich oder verschieden sind und eine verzweigte oder unverzweigte, gesättigte oder ungesättigte, aliphatische, aromatische oder gemischt aliphatische/aromatische zweibindige C1-C30-Kohlenwassergruppe, bevorzugt C1-C20-, besonders bevorzugt C1-C10-, ganz besonders bevorzugt C2-C7-, insbesondere bevorzugt (CH₂)₆, sind, und y gleich oder verschieden sind und 1, 2 oder 3 sind, z ist 2 oder 3, vorzugsweise 2, und das Molverhältnis an Silan der Formel I zu Silan der Formel II 20:80 - 85:15, vorzugsweise 30:70 - 85:15, besonders bevorzugt 40:60-85:15, ganz besonders bevorzugt 50:50 - 85:15, beträgt.

Bevorzugt kann die Silanmischung ein Silan der Formel I

(R¹)_{y}(R²)_{3-y}Si-R³-SH (I)

, und ein Silan der Formel II

(R¹)_{y}(R²)_{3-y}Si-R³-(S-R⁴)_{z}-Si(R¹)_{y}(R²)_{3-y} (II)

, enthalten, wobei z gleich 0 oder 2, besonders bevorzugt 0, ist und R¹, R², R³, R⁴ und y die gleiche Bedeutung haben wie oben beschrieben.

Die erfindungsgemäße Silanmischung kann weitere Additive enthalten oder nur aus Silanen der Formel I und Silanen der Formel II bestehen.

Die erfindungsgemäße Silanmischung kann Oligomere, die durch Hydrolyse und Kondensation der Silane der Formel I und/oder Silane der Formel II entstehen, enthalten.

Die erfindungsgemäße Silanmischung kann auf einem Träger, beispielsweise Wachs, Polymer oder Ruß, aufgebracht sein. Die erfindungsgemäße Silanmischung kann auf einer Kieselsäure aufgebracht sein, wobei die Anbindung physikalisch oder chemisch erfolgt sein kann.

R³ bzw. R⁴ können unabhängig voneinander -CH₂-, -CH₂CH₂-, -CH₂CH₂CH₂-, -CH₂CH₂CH₂CH₂-,-CH(CH₃)-, -CH₂CH(CH₃)-, -CH(CH₃)CH₂-, -C(CH₃)₂-, -CH(C₂H₅)-, -CH₂CH₂CH(CH₃)-,-CH(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂CH₂CH₂CH₂CH₂- oder 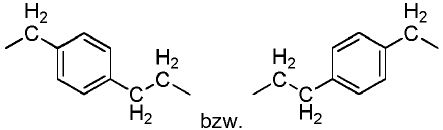 sein.

R¹ kann bevorzugt Methoxy oder Ethoxy sein.

Silane der Formel I können bevorzugt sein:

(EtO)₃Si-(CH₂)-SH,

(EtO)₃Si-(CH₂)₂-SH

oder

(EtO)₃Si-(CH₂)₃-SH,

Insbesondere bevorzugt ist das Silan der Formel I (EtO)₃Si-(CH₂)₃-SH.

Silane der Formel II können bevorzugt sein:

(EtO)₃Si-CH₂-S-CH₂-S-CH₂-Si(OEt)₃,

(EtO)₃Si-(CH₂)₂-S-CH₂-S-(CH₂)₂-Si(OEt)₃,

(EtO)₃Si-(CH₂)₃-S-CH₂-S-(CH₂)₃-Si(OEt)₃,

(EtO)₃Si-CH₂-S-(CH₂)₂-S-CH₂-Si(OEt)₃,

(EtO)₃Si-(CH₂)₂-S-(CH₂)₂-S-(CH₂)₂-Si(OEt)₃,

(EtO)₃Si-(CH₂)₃-S-(CH₂)₂-S-(CH₂)₃-Si(OEt)₃,

(EtO)₃Si-CH₂-S-(CH₂)₃-S-CH₂-Si(OEt)₃,

(EtO)₃Si-(CH₂)₂-S-(CH₂)₃-S-(CH₂)₂-Si(OEt)₃,

(EtO)₃Si-(CH₂)₃-S-(CH₂)₃-S-(CH₂)₃-Si(OEt)₃,

(EtO)₃Si-CH₂-S-(CH₂)₄-S-CH₂-Si(OEt)₃,

(EtO)₃Si-(CH₂)₂-S-(CH₂)₄-S-(CH₂)₂-Si(OEt)₃,

(EtO)₃Si-(CH₂)₃-S-(CH₂)₄-S-(CH₂)₃-Si(OEt)₃,

(EtO)₃Si-CH₂-S-(CH₂)₅-S-CH₂-Si(OEt)₃,

(EtO)₃Si-(CH₂)₂-S-(CH₂)₅-S-(CH₂)₂-Si(OEt)₃,

(EtO)₃Si-(CH₂)₃-S-(CH₂)₅-S-(CH₂)₃-Si(OEt)₃,

(EtO)₃Si-CH₂-S-(CH₂)₆-S-CH₂-Si(OEt)₃,

(EtO)₃Si-(CH₂)₂-S-(CH₂)₆-S-(CH₂)₂-Si(OEt)₃,

(EtO)₃Si-(CH₂)₃-S-(CH₂)₆-S-(CH₂)₃-Si(OEt)₃,

Insbesondere bevorzugt ist das Silane der Formel II (EtO)₃Si-(CH2)₃-S-(CH2)₆-S-(CH2)₃-Si(OEₜ)₃.

Ganz besonders bevorzugt ist eine Silanmischung aus (EtO)₃Si-(CH2)₃-SH und (EtO)₃Si-(CH2)₃-S-(CH2)₆-S-(CH2)₃-Si(OEt)₃.

Außerordentlich bevorzugt ist eine Silanmischung aus (EtO)₃Si-(CH₂)₃-SH und (EtO)₃Si-(CH₂)₃-S-(CH₂)₆-S-(CH₂)₃-Si(OEt)₃ .

Ein weiterer Gegenstand der Erfindung ist ein Verfahren zur Herstellung der erfindungsgemäßen Silanmischung, welches dadurch gekennzeichnet ist, dass man das Silan der Formel I

(R¹)_{y}(R²)_{3-y}Si-R³-SH (I)

, und ein Silan der Formel II

(R¹)_{y}(R²)_{3-y}Si-R³-(S-R⁴)_{z}-Si(R¹)_{y}(R²)_{3-y} (II)

, wobei R¹, R², R³, R⁴, y und z die oben genannte Bedeutung haben,
in einem Molverhältnis von 20:80 - 85:15, vorzugsweise 30:70 - 85:15, besonders bevorzugt 40:60-85:15, ganz besonders bevorzugt 50:50 - 85:15, mischt.
Vorzugsweise kann man ein Silan der Formel I

(R¹)_{y}(R²)_{3-y}Si-R³-SH (I)

, und ein Silan der Formel II

(R¹)_{y}(R²)_{3-y}Si-R³-(S-R⁴)_{z}-Si(R¹)_{y}(R²)_{3-y} (II)

, wobei R¹, R², R³, R⁴ und y die oben genannte Bedeutung haben und z = 2 ist, mischen.

Das erfindungsgemäße Verfahren kann unter Luftausschluss durchgeführt werden. Das erfindungsgemäße Verfahren kann unter Schutzgasatmosphäre durchgeführt werden, zum Beispiel unter Argon oder Stickstoff, bevorzugt unter Stickstoff.

Das erfindungsgemäße Verfahren kann bei Normaldruck, erhöhtem Druck oder reduziertem Druck durchgeführt werden. Bevorzugt kann das erfindungsgemäße Verfahren bei Normaldruck durchgeführt werden.

Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar sein.

Das erfindungsgemäße Verfahren kann zwischen 20 °C und 100 °C, bevorzugt zwischen 20 °C und 50 °C, besonders bevorzugt zwischen 20 °C und 30 °C, durchgeführt werden.

Das erfindungsgemäße Verfahren kann in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin oder Essigsäuremethylester oder einer Mischung der zuvor genannten Lösungsmittel durchgeführt werden. Das erfindungsgemäße Verfahren kann bevorzugt ohne Lösungsmittel durchgeführt werden.

Die erfindungsgemäße Silanmischung kann als Haftvermittler zwischen anorganischen Materialien, zum Beispiel Glaskugeln, Glassplittern, Glasoberflächen, Glasfasern, oder oxidischen Füllstoffen, bevorzugt Kieselsäuren wie gefällten Kieselsäuren und pyrogenen Kieselsäuren, und organischen Polymeren, zum Beispiel Duroplasten, Thermoplasten oder Elastomeren, beziehungsweise als Vernetzungsmittel und Oberflächenmodifizierungsmittel für oxidische Oberflächen verwendet werden.

Die erfindungsgemäße Silanmischung kann als Kopplungsreagenzien in gefüllten Kautschukmischungen, beispielsweise Reifenlaufflächen, technischen Gummiartikeln oder Schuhsolen, verwendet werden.

Vorteile der erfindungsgemäßen Silanmischungen sind ein verbesserter Rollwiderstand, eine höhere Verstärkung und ein geringerer Abrieb in Kautschukmischungen.

### Beispiele

NMR-Methode: Die in den Beispielen als Analysenergebnisse angegebenen Molverhältnisse und Massenanteile stammen aus ¹³C-NMR-Messungen mit den folgenden Kennzahlen: 100.6 MHz, 1000 Scans, Lösungsmittel CDCl₃, interner Standard für die Kalibrierung: Tetramethylsilan, Relaxationshilfsmittel Cr(acac)₃, für die Bestimmung des Massenanteils im Produkt wird eine definierte Menge Dimethylsulfon als interner Standard zugegeben und aus den Molverhältnissen der Produkte dazu der Massenanteil berechnet.
Vergleichsbeispiel 1: Bis(triethoxysilylpropyl)disulfide der Firma Evonik Industries AG.
Vergleichsbeispiel 2: 3-Octanoylthio-1-propyltriethoxysilane NXT Silan der Firma Momentive Performance Materials.
Vergleichsbeispiel 3: (3-Mercaptopropyl)triethoxysilan.
Vergleichsbeispiel 4: Bistriethoxysilyloctan der Firma ABCR GmbH.
Vergleichsbeispiel 5: Bis(triethoxysilylpropyl)sulfid.
   Zu einer Lösung von Chlorpropyltriethoxysilan (361 g; 1,5 mol; 1,92 eq) in Ethanol (360 ml) wurde Na₂S (61,5 g; 0,78 mol; 1,00 eq) portionsweise so zugegeben, dass 60 °C nicht überschritten wurden. Nach vollständiger Zugabe wurde 3 h am Rückfluss erhitzt ehe auf Raumtemperatur erkalten gelassen wurde. Das Reaktionsprodukt wurde durch Filtration von ausgefallenen Salzen befreit. Durch eine destillative Aufreinigung (0,04 mbar; 110 °C) wurde das Produkt (Ausbeute: 73%, Reinheit: >99% im ¹³C-NMR) als klare Flüssigkeit erhalten.
Vergleichsbeispiel 6: 1,6-Bis(thiopropyltriethoxysilyl)hexan
   Zu Mercaptopropyltriethoxysilan (62,0 g; 0,260 mol; 2,10 eq) wurde Natriumethanolat (21% in EtOH; 82,3 g; 0,254 mol; 2,05 eq) so zu dosiert, dass die Reaktionstemperatur nicht 35 °C überstieg. Nach vollständiger Zugabe wurde 2 h am Rückfluss erhitzt. Dann wurde das Reaktionsgemisch zu 1,6-Dichlorhexan (19,2 g; 0,124 mol; 1,00 eq) über 1,5 h bei 80 °C zugegeben. Nach vollständiger Zugabe wurde 3 h am Rückfluss erhitzt und anschließend auf Raumtemperatur erkalten gelassen. Ausgefallene Salze wurden abfiltriert und das Produkt unter vermindertem Druck vom Lösungsmittel befreit. Das Produkt (Ausbeute: 88%, Reinheit: >99% im ¹³C-NMR) wurde als klare Flüssigkeit erhalten.
Vergleichsbeispiel 7: In einen PE-Flachbeutel wurden 6,84 Gewichtsteile Vergleichsbeispiel 1 mit 2,65 Gewichtsteilen Vergleichsbeispiel 5 eingewogen und vermischt. Diese Mischung entspricht einem Molverhältnis: 71 % (EtO)₃Si(CH₂)₃S₂(CH₂)₃Si(OEt)₃ und 29 % (EtO)₃Si(CH₂)₃S(CH₂)₃Si(OEt)₃.
Vergleichsbeispiel 8: In einen PE-Flachbeutel wurden 6,84 Gewichtsteile Vergleichsbeispiel 1 mit 3,65 Gewichtsteilen Vergleichsbeispiel 5 eingewogen und vermischt. Diese Mischung entspricht einem Molverhältnis: 64 % (EtO)₃Si(CH₂)₃S₂(CH₂)₃Si(OEt)₃ und 36 % (EtO)₃Si(CH₂)₃S(CH₂)₃Si(OEt)₃.
Vergleichsbeispiel 9: In einen PE-Flachbeutel wurden 6,84 Gewichtsteile Vergleichsbeispiel 1 mit 4,87 Gewichtsteilen Vergleichsbeispiel 5 eingewogen und vermischt. Diese Mischung entspricht einem Molverhältnis: 57 % (EtO)₃Si(CH₂)₃S₂(CH₂)₃Si(OEt)₃ und 43 % (EtO)₃Si(CH₂)₃S(CH₂)₃Si(OEt)₃.
Vergleichsbeispiel 10: In einen PE-Flachbeutel wurden 6,84 Gewichtsteile Vergleichsbeispiel 2 mit 2,10 Gewichtsteilen Vergleichsbeispiel 6 eingewogen und vermischt. Diese Mischung entspricht einem Molverhältnis: 83 % (EtO)₃Si(CH₂)₃SCO(CH₂)₆CH₃ und 17 % (EtO)₃Si(CH₂)₃S(CH₂)₆S(CH₂)₃Si(OEt)₃.
Vergleichsbeispiel 11: In einen PE-Flachbeutel wurden 6,84 Gewichtsteile Vergleichsbeispiel 2 mit 3,15 Gewichtsteilen Vergleichsbeispiel 6 eingewogen und vermischt. Diese Mischung entspricht einem Molverhältnis: 77 % (EtO)₃Si(CH₂)₃SCO(CH₂)₆CH₃ und 23 % (EtO)₃Si(CH₂)₃S(CH₂)₆S(CH₂)₃Si(OEt)₃.
Vergleichsbeispiel 12: In einen PE-Flachbeutel wurden 6,84 Gewichtsteile Vergleichsbeispiel 2 mit 4,20 Gewichtsteilen Vergleichsbeispiel 6 eingewogen und vermischt. Diese Mischung entspricht einem Molverhältnis: 71 % (EtO)₃Si(CH₂)₃SCO(CH₂)₆CH₃ und 29 % (EtO)₃Si(CH₂)₃S(CH₂)₆S(CH₂)₃Si(OEt)₃.
Vergleichsbeispiel 13: In einen PE-Flachbeutel wurden 6,84 Gewichtsteile Vergleichsbeispiel 2 mit 1,65 Gewichtsteilen Vergleichsbeispiel 4 eingewogen und vermischt. Diese Mischung entspricht einem Molverhältnis: 83 % (EtO)₃Si(CH₂)₃SCO(CH₂)₆CH₃ und 17 % (EtO)₃Si(CH₂)₈Si(OEt)₃.
Vergleichsbeispiel 14: In einen PE-Flachbeutel wurden 6,84 Gewichtsteile Vergleichsbeispiel 2 mit 2,47 Gewichtsteilen Vergleichsbeispiel 4 eingewogen und vermischt. Diese Mischung entspricht einem Molverhältnis: 77 % (EtO)₃Si(CH₂)₃SCO(CH₂)₆CH₃ und 23 % (EtO)₃Si(CH₂)₈Si(OEt)₃.
Vergleichsbeispiel 15: In einen PE-Flachbeutel wurden 6,84 Gewichtsteile Vergleichsbeispiel 2 mit 3,29 Gewichtsteilen Vergleichsbeispiel 4 eingewogen und vermischt. Diese Mischung entspricht einem Molverhältnis: 71 % (EtO)₃Si(CH₂)₃SCO(CH₂)₆CH₃ und 29 % (EtO)₃Si(CH₂)₈Si(OEt)₃.

Die Beispiele 3-6 sind Referenzbeispiele und entsprechen nicht der Erfindung.
Beispiel 1: In einen PE-Flachbeutel wurden 6,84 Gewichtsteile Vergleichsbeispiel 3 mit 3,21 Gewichtsteilen Vergleichsbeispiel 6 eingewogen und vermischt. Diese Mischung entspricht einem Molverhältnis: 83 % (EtO)₃Si(CH₂)₃SH und 17 % (EtO)₃Si(CH₂)₃S(CH₂)₆S(CH₂)₃Si(OEt)₃.
Beispiel 2: In einen PE-Flachbeutel wurden 6,84 Gewichtsteile Vergleichsbeispiel 3 mit 4,81 Gewichtsteilen Vergleichsbeispiel 6 eingewogen und vermischt. Diese Mischung entspricht einem Molverhältnis: 77 % (EtO)₃Si(CH₂)₃SH und 23 % (EtO)₃Si(CH₂)₃S(CH₂)₆S(CH₂)₃Si(OEt)₃.
Beispiel 3: In einen PE-Flachbeutel wurden 6,84 Gewichtsteile Vergleichsbeispiel 3 mit 2,52 Gewichtsteilen Vergleichsbeispiel 4 eingewogen und vermischt. Diese Mischung entspricht einem Molverhältnis: 83 % (EtO)₃Si(CH₂)₃SH und 17 % (EtO)₃Si(CH₂)₈Si(OEt)₃.
Beispiel 4: In einen PE-Flachbeutel wurden 6,84 Gewichtsteile Vergleichsbeispiel 3 mit 3,78 Gewichtsteilen Vergleichsbeispiel 4 eingewogen und vermischt. Diese Mischung entspricht einem Molverhältnis: 77 % (EtO)₃Si(CH₂)₃SH und 23 % (EtO)₃Si(CH₂)₈Si(OEt)₃.
Beispiel 5: In einen PE-Flachbeutel wurden 6,84 Gewichtsteile Vergleichsbeispiel 3 mit 2,54 Gewichtsteilen Vergleichsbeispiel 5 eingewogen und vermischt. Diese Mischung entspricht einem Molverhältnis: 83 % (EtO)₃Si(CH₂)₃SH und 17 % (EtO)₃Si(CH₂)₃S(CH₂)₃Si(OEt)₃.
Beispiel 6: In einen PE-Flachbeutel wurden 6,84 Gewichtsteile Vergleichsbeispiel 3 mit 3,81 Gewichtsteilen Vergleichsbeispiel 5 eingewogen und vermischt. Diese Mischung entspricht einem Molverhältnis: 77 % (EtO)₃Si(CH₂)₃SH und 23 % (EtO)₃Si(CH₂)₃S(CH₂)₃Si(OEt)₃.
Beispiel 7: Gummitechnische Untersuchungen
   Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die Silanmischungen enthalten alle eine identische phr-Menge an Silan der Formel I, welches während der Vulkanisation mit dem Kautschuk reagiert sowie unterschiedliche phr Mengen des Silans der Formel II.

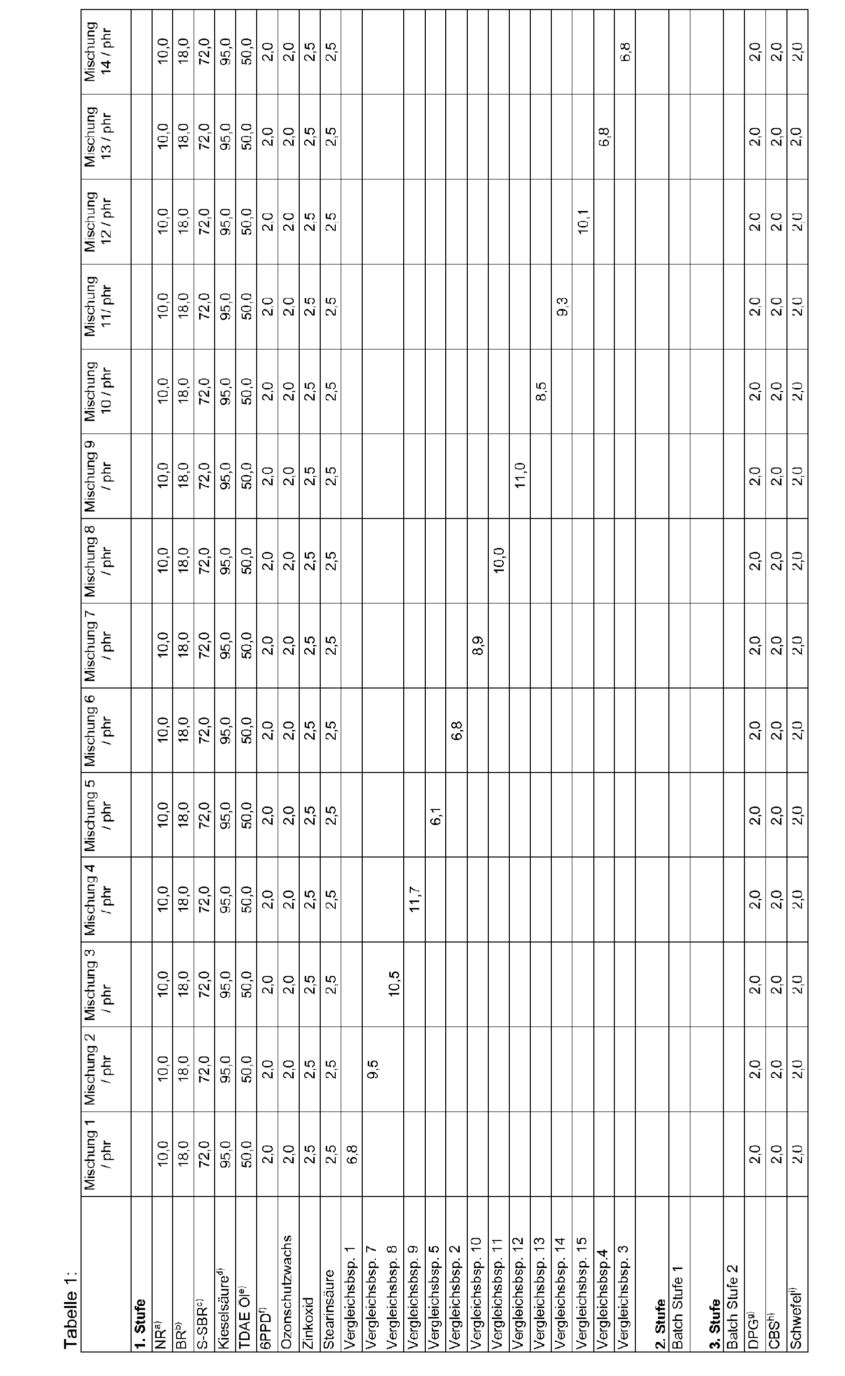

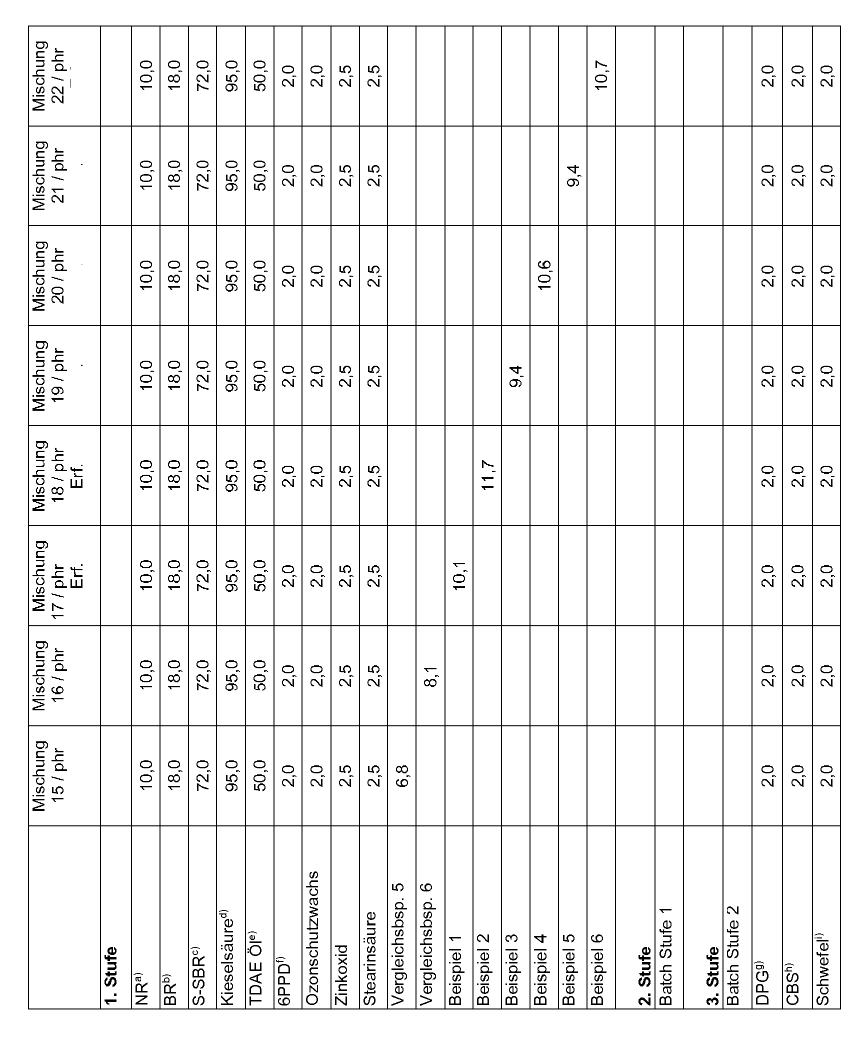

### Verwendete Substanzen:

a) NR TSR: Naturkautschuk (TSR = Technically Specified Rubber).
b) Europrene Neocis BR 40, Fa. Polimeri.
c) S-SBR: Sprintan^{®} SLR-4601, Fa. Trinseo.
d) Kieselsäure: ULTRASIL^{®} VN 3 GR der Firma Evonik Industries AG (gefällte Kieselsäure, BET-Oberfläche = 175 m²/g).
e) TDAE-Öl: TDAE = Treated Distillate Aromatic Extract.
f) 6PPD: *N*-(1,3-dimethylbutyl)-*N'*-phenyl-p-phenylene diamine (6PPD).
g) DPG: *N,N*'-Diphenylguanidin (DPG).
h) CBS: *N*-Cyclohexyl-2-benzothiazolsulfenamid.
i) Schwefel: Mahlschwefel.

Die Mischungsherstellung erfolgte unter in der Kautschukindustrie üblichen Verfahren in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t95 - t100 (gemessen am Moving Disc Rheometer gemäß ASTM D 5289-12/ ISO 6502) unter Druck bei 160°C - 170°C hergestellt.

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgte gemäß der in Tabelle 2 angegebenen Prüfmethoden. Die Ergebnisse der gummitechnischen Prüfung sind in Tabelle 3 angegeben.

**Tabelle 2:**

| Physikalische Testung | Norm/ Bedingungen |
|---|---|
| Viskoelastische Eigenschaften des Vulkanisats bei 70°C, Strain Sweep, 1 Hz, 1% - 100% Dehnung | RPA (= engl. "rubber process analyzer") in Anlehnung an ASTM |
| Verlustfaktor tan δ bei 10% Dehnung | D6601 Werte aufgenommen während des zweiten Dehnungsdurchlauf |
| Viskoelastische Eigenschaften des Vulkanisats bei 55°C | aus dynamisch-mechanischer Messung gemäß DIN 53 513, |
| Maximaler Verlustfaktor tan δ | Dehnungsdurchlauf |
| Rückprallelastizität bei 70°C | gemäß ISO 4662 |
| Rückprallelastizität / % | |
| Zugversuch bei 23°C | gemäß DIN 53 504 |
| Spannungswert bei 200 % Dehnung / MPa | |
| Abrieb, 10 N bei 23°C | ermittelt mit einem Gerät mit rotierender Zylindertrommel, Angabe des Volumenverlustes gemäß ISO 4649 |
| Abrieb / mm³ | |

**Tabelle 3:**

| | Mischung 1 | Mischung 2 | Mischung 3 | Mischung 4 | Mischung 5 | Mischung 6 |
|---|---|---|---|---|---|---|
| tan δ (10%) bei 70°C | 0,188 | 0,190 | 0,186 | 0,186 | 0,213 | 0,177 |
| Maximaler tan δ bei 55°C | 0,174 | 0,168 | 0,169 | 0,164 | 0,207 | 0,179 |
| Rückprallelastizität / % | 44,0 | 46,2 | 48,3 | 48,8 | 40,9 | 45,1 |
| Modul 200 %/MPa | 4,5 | 5,0 | 5,2 | 5,3 | 2,9 | 4,5 |
| Abrieb / mm³ | 146 | 147 | 146 | 159 | 215 | 133 |
| | | | | | | |

| | Mischung 7 | Mischung 8 | Mischung 9 | Mischung 10 | Mischung 11 | Mischung 12 |
|---|---|---|---|---|---|---|
| tan δ (10%) bei 70°C | 0,171 | 0,171 | 0,169 | 0,238 | 0,236 | 0,235 |
| Maximaler tan δ bei 55°C | 0,172 | 0,168 | 0,166 | 0,210 | 0,217 | 0,205 |
| Rückprallelastizität / % | 47,5 | 49,1 | 49,3 | 38,6 | 38,4 | 39,2 |
| Modul 200 % / MPa | 4,7 | 4,9 | 5,0 | 1,8 | 1,8 | 1,8 |
| Abrieb / mm³ | 134 | 143 | 143 | 282 | 287 | 268 |
| | | | | | | |

| | Mischung 13 | Mischung 14 | Mischung 15 | Mischung 16 | | |
|---|---|---|---|---|---|---|
| tan δ (10%) bei 70°C | 0,275 | 0,174 | 0,240 | 0,174 | | |
| Maximaler tan δ bei 55°C | 0,218 | 0,176 | 0,209 | 0,192 | | |
| Rückprallelastizität / % | 31,7 | 46,6 | 34,2 | 42,1 | | |
| Modul 200 %/MPa | 1,1 | 4,4 | 1,4 | 2,5 | | |
| Abrieb / mm³ | 320 | 99 | 234 | 196 | | |
| | | | | | | |

| | Mischung 17 Erf. | Mischung 18 Erf. | Mischung 19 | Mischung 20 | Mischung 21 | Mischung 22 |
|---|---|---|---|---|---|---|
| tan δ (10%) bei 70°C | 0,144 | 0,149 | 0,148 | 0,141 | 0,155 | 0,152 |
| Maximaler tan δ bei 55°C | 0,140 | 0,139 | 0,153 | 0,138 | 0,154 | 0,144 |
| Rückprallelastizität / % | 52,9 | 54,7 | 51,9 | 53,7 | 51,5 | 52,9 |
| Modul 200 % / MPa | 5,9 | 6,3 | 7,1 | 7,6 | 6,1 | 6,4 |
| Abrieb / mm³ | 81 | 86 | 67 | 76 | 72 | 85 |

Gegenüber den Vergleichsmischungen zeichnen sich die erfindungsgemäßen Mischungen durch Vorteile im Rollwiderstand aus (tan δ Messungen, Rückprallelastizität bei 70 °C). Abrieb und Verstärkung der erfindungsgemäßen Mischungen sind ebenfalls verbessert im Vergleich zum Stand der Technik. (Abrieb, Modul 200%).

## Patentansprüche

1. Silanmischung, enthaltend ein Silan der Formel I
((R¹)_{y}(R²)_{3-y}Si-R³-SH (I)
, und ein Silan der Formel II
(R¹)_{y}(R²)_{3-y}Si-R³-(S-R⁴)_{z}-Si(R¹)_{y}(R²)_{3-y} (II)
, wobei R¹ gleich oder verschieden sind und C1-C10-Alkoxygruppen, Phenoxygruppe, C4-C10-Cycloalkoxygruppen oder Alkylpolyethergruppe -O-(R⁵-O)ᵣ-R⁶ mit R⁵ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, r eine ganze Zahl von 1 bis 30 und R⁶ unsubstituierte oder substituierte, verzweigte oder unverzweigte einbindige Alkyl-, Alkenyl-, Aryl- oder Aralkylgruppe ist,
R² gleich oder verschieden sind und C6-C20-Arylgruppen, C1-C10-Alkylgruppen, C2-C20-Alkenylgruppe, C7-C20-Aralkylgruppe oder Halogen ist,
R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind,
R⁴ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind,
und y gleich oder verschieden sind und 1, 2 oder 3 sind, z ist 2 oder 3,
und das Molverhältnis an Silan der Formel I zu Silan der Formel II 20:80 - 85:15 beträgt.

2. Silanmischung gemäß Anspruch 1, **dadurch gekennzeichnet, dass** das Silan der Formel I (EtO)₃Si-(CH₂)₃-SH und das Silan der Formel II (EtO)₃Si-(CH₂)₃-S-(CH₂)₆-S-(CH₂)₃-Si(OEt)₃ ist.

3. Silanmischung gemäß Anspruch 1, **dadurch gekennzeichnet, dass** das Molverhältnis an Silan der Formel I zu Silan der Formel II 50:50 - 85:15 beträgt.

4. Verfahren zur Herstellung von Silanmischung gemäß Anspruch 1, **dadurch gekennzeichnet, dass** man das Silan der Formel I
((R¹)_{y}(R²)_{3-y}Si-R³-SH (I)
, und ein Silan der Formel II
(R¹)_{y}(R²)_{3-y}Si-R³-(S-R⁴)_{z}-Si(R¹)_{y}(R²)_{3-y} (II)
, wobei R¹, R², R³, R⁴, y und z die oben genannte Bedeutung haben,
in einem Molverhältnis von 20:80 - 85:15 mischt.

5. Verfahren zur Herstellung von Silanmischung gemäß Anspruch 4, **dadurch gekennzeichnet, dass** das Molverhältnis an Silan der Formel I zu Silan der Formel II 50:50 - 85:15 beträgt.

6. Verfahren zur Herstellung von Silanmischung gemäß Anspruch 5, **dadurch gekennzeichnet, dass** das Silan der Formel I (EtO)₃Si-(CH₂)₃-SH und das Silan der Formel II (EtO)₃Si-(CH₂)₃-S-(CH₂)₆-S-(CH₂)₃-Si(OEt)₃ ist.

## Claims

1. Silane mixture comprising a silane of the formula I
(R¹)_{y}(R²)_{3-y}Si-R³SH (I)
and a silane of the formula II
(R¹)_{y}(R²)_{3-y}Si-R³-(S-R⁴)_{z}-Si(R¹)_{y}(R²)_{3-y} (II)
where R¹ are the same or different and are C1-C10-alkoxy groups, phenoxy group, C4-C10-cycloalkoxy groups or alkyl polyether group -O-(R⁵-O)ᵣ-R⁶ where R⁵ are the same or different and are a branched or unbranched, saturated or unsaturated, aliphatic, aromatic or mixed aliphatic/aromatic divalent C1-C30 hydrocarbon group, r is an integer from 1 to 30 and R⁶ is unsubstituted or substituted, branched or unbranched monovalent alkyl, alkenyl, aryl or aralkyl group,
R² are the same or different and is C6-C20-aryl groups, C1-C10-alkyl groups, C2-C20-alkenyl group, C7-C20-aralkyl group or halogen,
R³ are the same or different and are a branched or unbranched, saturated or unsaturated, aliphatic, aromatic or mixed aliphatic/aromatic divalent C1-C30 hydrocarbon group,
R⁴ are the same or different and are a branched or unbranched, saturated or unsaturated, aliphatic, aromatic or mixed aliphatic/aromatic divalent C1-C30 hydrocarbon group,
and y are the same or different and are 1, 2 or 3, z is 2 or 3,
and the molar ratio of silane of the formula I to silane of the formula II is 20:80-85:15.

2. Silane mixture according to Claim 1, **characterized in that** the silane of the formula I is (EtO)₃Si-(CH₂)₃-SH and the silane of the formula II is (EtO)₃Si-(CH₂)₃-S-(CH₂)₆-S-(CH₂)₃-Si (OEt)₃.

3. Silane mixture according to Claim 1, **characterized in that** the molar ratio of silane of the formula I to silane of the formula II is 50:50-85:15.

4. Process for preparing silane mixture according to Claim 1, **characterized in that** the silane of the formula I
(R¹)_{y}(R²)_{3-y}Si-R³-SH (I)
and a silane of the formula II
(R¹)_{y}(R²)_{3-y}Si-R³-(S-R⁴)_{z}-Si(R¹)_{y}(R²)_{3-y} (II)
where R¹, R², R³, R⁴, y and z have the definition given above
are mixed in a molar ratio of 20:80-85:15.

5. Process for preparing silane mixture according to Claim 4, **characterized in that** the molar ratio of silane of the formula I to silane of the formula II is 50:50-85:15.

6. Process for preparing silane mixture according to Claim 5, **characterized in that** the silane of the formula I is (EtO)₃Si-(CH₂)₃-SH and the silane of the formula II is (EtO)₃Si-(CH₂)₃-S-(CH₂)₆-S-(CH₂)₃-Si(OEt)₃.

## Revendications

1. Mélange de silanes, contenant un silane de formule I
**(R¹)_{y}(R²)_{3-y}Si-R³-SH** **(I)**
**.** et un silane de formule II
**(R¹)_{y}(R²)_{3-y}Si-R³-(S-R⁴)_{z}-Si(R¹)_{y}(R²)_{3-y}** **(II)**
**.**
R¹ étant identiques ou différents et étant des groupes alcoxy en C1 à C10, un groupe phénoxy, des groupes cycloalcoxy en C4 à C10 ou un groupe alkylpolyéther **-O-(R⁵-O)_{I}-R⁶,** R⁵ étant identiques ou différents, et étant un groupe hydrocarboné en C1 à C30 divalent aliphatique, aromatique ou mixte aliphatique/aromatique, ramifié ou non ramifié, saturé ou insaturé, r étant un nombre entier de 1 à 30 et R⁶ étant un groupe monovalent alkyle, alcényle, aryle ou aralkyle, non substitué ou substitué, ramifié ou non ramifié,
R² étant identiques ou différents et étant des groupes aryle en C6 à C20, des groupes alkyle en C1 à C10, des groupes alcényle en C2 à C20, des groupes aralkyle en C7 à C20 ou halogène,
R³ étant identiques ou différents et étant un groupe hydrocarboné en C1 à C30 divalent aliphatique, aromatique ou mixte aliphatique/aromatique, ramifié ou non ramifié, saturé ou insaturé,
R⁴ étant identiques ou différents et étant un groupe hydrocarboné en C1 à C30 divalent aliphatique, aromatique ou mixte aliphatique/aromatique, ramifié ou non ramifié, saturé ou insaturé,
et y étant identiques ou différents et étant 1, 2 ou 3, z étant 2 ou 3,
et le rapport molaire de silane de formule I sur silane de formule II étant de 20 : 80 à 85 : 15.

2. Mélange de silanes selon la revendication 1, **caractérisé en ce que** le silane de formule I est **(EtO)₃Si-(CH₂)₃-SH** et le silane de formule II est **(EtO)₃Si-(CH₂)₃-S-(CH₂)₆-S-(CH₂)3-Si(OEt)₃** .

3. Mélange de silanes selon la revendication 1, **caractérisé en ce que** le rapport molaire de silane de formule I sur silane de formule II est de 50 : 50 à 85 : 15.

4. Procédé pour la préparation d'un mélange de silanes selon la revendication 1, **caractérisé en ce qu'**on mélange le silane de formule I
**(R¹)_{y}(R²)_{3-y}Si-R³SH** **(I)**
**.** et un silane de formule II
**(R¹)_{y}(R²)_{3-y}Si-R³-(S-R⁴)_{z}-Si(R¹)_{y}(R²)_{3-y}** **(II)**
**,** R¹, R², R³, R⁴, y et z possédant la signification mentionnée ci-dessus,
en un rapport molaire de 20 : 80 à 85 : 15.

5. Procédé pour la préparation d'un mélange de silanes selon la revendication 4, **caractérisé en ce que** le rapport molaire de silane de formule I sur silane de formule II est de 50 : 50 à 85 : 15.

6. Procédé pour la préparation d'un mélange de silanes selon la revendication 5, **caractérisé en ce que** le silane de formule I est **(EtO)₃Si-(CH₂)₃-SH** et le silane de formule II est **(EtO)₃Si-(CH₂)₃-S-(CH₂)₆-S-(CH₂)₃-Si(OE)₃ .**
